# EUROPEAN PATENT APPLICATION

(11) **EP 4 768 151 A1**
(43) Date of publication of application: **01.07.2026**
(21) Application number: 24882077.1
(22) Date of filing: 20.09.2024
(51) Int. Cl.: B22D 11/16, B22D 46/00, G06T 7/90

(54) **LIGHT SOURCE FOR SIMULATING MOLTEN METAL LEAKAGE, METHOD FOR SIMULATING MOLTEN METAL LEAKAGE, METHOD FOR CONFIRMING OPERATION OF MOLTEN METAL LEAKAGE DETECTION DEVICE, AND METHOD FOR SETTING MOLTEN METAL LEAKAGE DETECTION DEVICE**

(30) Priority: 27.10.2023 JP 2023184398
(71) Applicant: JFE Steel Corporation, Tokyo 100-0011 (JP)
(72) Inventor: KUBOTA Yuki, Tokyo 100-0011 (JP); IDO Hiroharu, Tokyo 100-0011 (JP); KONDO Hirokazu, Tokyo 100-0011 (JP)
(74) Representative: Haseltine Lake Kempner LLP
(86) International application number: PCT/JP2024/033712
(87) International publication number: WO 2025/088960

(57) **Abstract**

A light source for simulating molten metal leakage that allows easy simulation of molten metal leakage such as a breakout from a molten metal handling facility is provided.

A light source for simulating molten metal leakage is used to simulate molten metal leakage from a molten metal handling facility and includes a light emitting unit that allows adjustment of coordinates of a color space of light to be emitted.

## Description

### Technical Field

The present invention relates to a light source for simulating molten metal leakage, a method for simulating molten metal leakage, a method for confirming the operation of a molten metal leakage detection device, and a method for setting the molten metal leakage detection device used to simulate leakage of molten metal from a molten metal handling facility.

### Background Art

In a facility that handles molten metal, accidents causing significant damage to the facility such as leakage of molten metal unavoidably occur. Thus, when the leakage of molten metal occurs, it is necessary to quickly detect the occurrence and take measures to prevent the spread of the damage to the facility. A continuous casting machine configured to continuously cast molten metal is a typical example of a facility handling the molten metal. In the continuous casting machine, a problem referred to as a "breakout", in which solidified shell of the slab breaks and molten metal jets from inside, unavoidably occurs.

The breakout is an abnormal phenomenon occurring in a region where the solidified shell of the slab is thin. In many cases, the breakout occurs in a range within 5 m from a position immediately below a device called a mold that mainly solidifies the solidified shell of the slab. In the related art, the breakout is detected by visual monitoring performed by an operator, or by a method in which many sensors such as thermocouples are arranged, and the breakout is detected based on, for example, a break caused when the molten metal splashes and adheres to the thermocouples.

As a technique to detect the breakout, Patent Literature 1 discloses the following technique: that is, an image of a segment in a lower portion of the mold is taken by a camera, the taken image is checked based on an abnormality determination logic of an image determination device to detect the occurrences of the breakout, and supplying of molten steel is automatically stopped. According to Patent Literature 1, the breakout is detected using the abnormality determination logic in which pixels at which all the thresholds of the RGB (three primary colors of light) or the HSV (hue, saturation, and value) fall within a certain range are a specific color, the numbers of pixels indicating the specific color are integrated, and, when a momentary value of the integrated value becomes greater than or equal to a predetermined threshold, the occurrence of the breakout is detected.

### Citation List

### Patent Literature

PTL 1: Japanese Unexamined Patent Application Publication No. 2001-269770

### Summary of Invention

### Technical Problem

There is a problem with the device disclosed in Patent Literature 1 in that, in a facility in which an abnormality detection device is actually installed, adjustment or operation confirmation of an abnormality detection function in the abnormality detection device cannot be performed without the occurrences of an abnormality such as a breakout. That is, after the abnormality detection device has been installed in a target facility, a determination function is to be tuned using a result of taking image of the abnormality having occurred in the facility. Thus, there is a problem in that one to a few times of the abnormality from the beginning cannot be detected.

There is yet another problem in that, since the abnormality such as a breakout does not frequently occur, tuning of the detection function of the abnormality detection device takes a lot of time. As measures to address this problem, there may be a method of tuning of the detection function using a result of abnormality detection in a similar facility. However, a range of image taking with a camera differs depending on the target facilities, and surrounding environments such as arrangement of illumination in the factory also differ. Accordingly, the detection function to detect the abnormality cannot be tuned by using a result of the abnormality detection in a similar facility.

The present invention has been made in view of the problems of the related art as described above, and one of objects of the present invention is to provide a light source for simulating molten metal leakage and a method for simulating molten metal leakage which allow easy simulation of leakage of molten metal from a molten metal handling facility such as a breakout. Another object of the present invention is to provide a method for confirming an operation of a molten metal leakage detection device and a method for setting the molten metal leakage detection device.

### Solution to Problem

Solutions to address the above-described problems are as follows.
[1] A light source for simulating molten metal leakage is used to simulate leakage of molten metal from a molten metal handling facility. The light source for simulating molten metal leakage includes a light emitting unit configured to allow adjustment of coordinates of a color space of light to be emitted by the light emitting unit.
[2] In the light source for simulating molten metal leakage according to [1], the coordinates of the color space of the light emitting unit are adjusted so as to fall within a range of coordinates of a color space of pixels in image data generated by taking an image of the molten metal.
[3] In a method for simulating molten metal leakage simulates leakage of molten metal in a molten metal handling facility, the light source for simulating molten metal leakage according to claim 2 is installed in the facility to simulate the leakage of the molten metal from the facility.
[4] A method for confirming an operation of a molten metal leakage detection device uses the light source for simulating molten metal leakage according to [1]. The leakage detection device includes an image taking unit configured to take an image of the molten metal handling facility to generate image data, a data acquisition unit configured to acquire pixel number data of pixels indicating a specific color included in a predetermined region of the image data, and a detection unit configured to detect, using the pixel number data, that molten metal leaks. The method includes an installing step installing, in the facility, the light source for simulating molten metal leakage in which the coordinates of the color space of the light emitting unit are adjusted so as to fall within a range of coordinates of a color space of pixels in image data generated by taking an image of the molten metal, an image data generating step generating the image data by taking an image, using the image taking unit, of the facility including the light source for simulating molten metal leakage, a data acquiring step acquiring the pixel number data of the pixels indicating the specific color included in the predetermined region of the image data, and a confirming step confirming that the detection unit detects the leakage of the molten metal using the pixel number data.
[5] A method for confirming an operation of a molten metal leakage detection device uses the light source for simulating molten metal leakage according to [1]. The leakage detection device includes an image taking unit configured to take an image of the molten metal handling facility to generate image data, a data acquisition unit configured to acquire pixel number data of pixels indicating a specific color included in a predetermined region of the image data, and a detection unit configured to detect, using the pixel number data, that molten metal leaks. The method includes an installing step installing, in the facility, the light source for simulating molten metal leakage in which the coordinates of the color space of the light emitting unit are adjusted so as to fall outside a range of coordinates of a color space of pixels in image data generated by taking an image of the molten metal, an image data generating step generating the image data by taking an image, using the image taking unit, of the facility including the light source for simulating molten metal leakage, a data acquiring step acquiring the pixel number data of the pixels indicating the specific color included in the predetermined region of the image data, and a confirming step confirming that the detection unit does not detect the leakage of the molten metal using the pixel number data.
[6] A method for setting a molten metal leakage detection device uses the light source for simulating molten metal leakage according to [2]. The leakage detection device includes an image taking unit configured to take an image of the molten metal handling facility to generate image data, a data acquisition unit configured to acquire pixel number data of pixels indicating a specific color included in a predetermined region of the image data, and a detection unit configured to detect, using the pixel number data, that molten metal leaks. The method includes an installing step installing the light source for simulating molten metal leakage in the facility, an image data generating step generating the image data by taking an image, using the image taking unit, of the facility including the light source for simulating molten metal leakage, and a setting step setting an installation position of the image taking unit using the image data.
[7] A method for setting a molten metal leakage detection device uses the light source for simulating molten metal leakage according to [2]. The leakage detection device includes an image taking unit configured to take an image of the molten metal handling facility to generate image data, a data acquisition unit configured to acquire pixel number data of pixels indicating a specific color included in a predetermined region of the image data, and a detection unit configured to detect, using the pixel number data, that molten metal leaks. The method includes an installing step installing the light source for simulating molten metal leakage in the facility, an image data generating step generating the image data by taking an image, using the image taking unit, of the facility including the light source for simulating molten metal leakage, and a setting step setting a range of coordinates in a color space of the specific color using coordinates of pixels, in a color space, indicating the light source for simulating molten metal leakage in the image data.
[8] A method for setting a molten metal leakage detection device uses the light source for simulating molten metal leakage according to [2]. The leakage detection device includes an image taking unit configured to take an image of the molten metal handling facility to generate image data, a data acquisition unit configured to acquire pixel number data of pixels indicating a specific color included in a predetermined region of the image data, and a detection unit configured to detect, using the pixel number data, that molten metal leaks. The method includes an installing step installing the light source for simulating molten metal leakage in the facility, an image data generating step generating the image data by taking an image, using the image taking unit, of the facility including the light source for simulating molten metal leakage, a data acquiring step acquiring the pixel number data of the pixels indicating the specific color included in the predetermined region of the image data, and a setting step setting a threshold used when the detection unit detects that the molten metal leaks using the pixel number data.

### Advantageous Effects of Invention

The leakage of molten metal such as a breakout can be easily simulated by using the light source for simulating molten metal leakage according to the present invention. Thus, confirmation of the operation and tuning of the molten metal leakage detection device can be quickly and easily performed by using the light source for simulating molten metal leakage.

### Brief Description of Drawings

[Fig. 1] Fig. 1 is a front view illustrating an example of a light source for simulating molten metal leakage according to the present embodiment.
[Fig. 2] Fig. 2 is a schematic sectional view of a metal continuous casting machine using a molten metal leakage detection device for detecting leakage of molten metal.
[Fig. 3] Fig. 3 is a schematic diagram illustrating an example of the configuration of an image analyzer.
[Fig. 4] Fig. 4 is a schematic sectional view illustrating a state in which the molten metal leakage detection device is tuned.

### Description of Embodiments

Hereinafter, a light source for simulating molten metal leakage according to an embodiment is described. It is to be understood that the following embodiment is an example of a preferred embodiment of the present invention and does not limit the present invention at all.

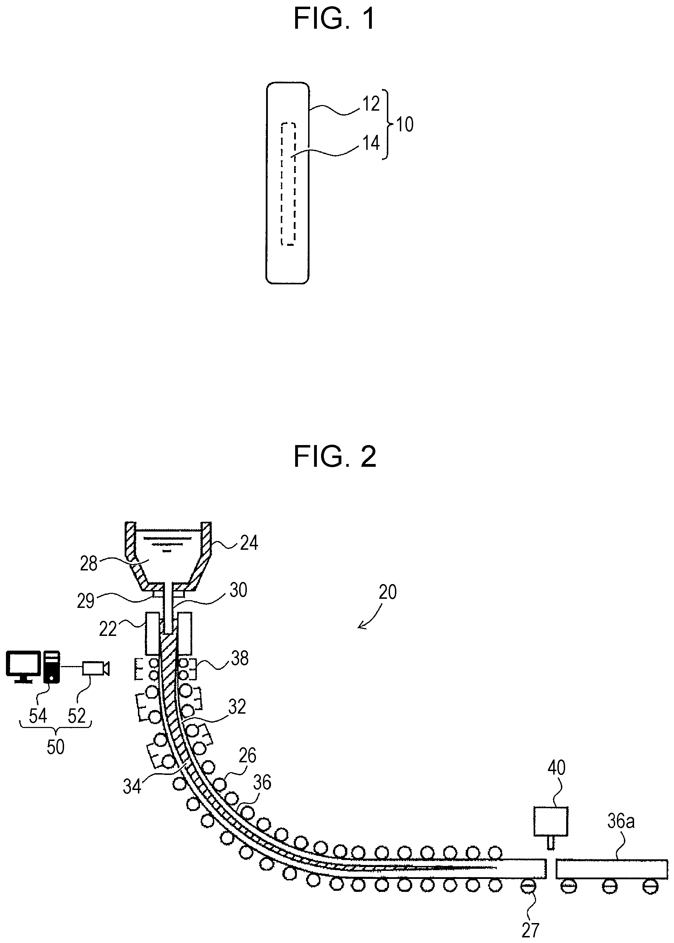

The following description explains an embodiment in which a molten metal leakage detection device is tuned and operation of the molten metal leakage detection device is confirmed using the light source for simulating molten metal leakage according to the present embodiment. Fig. 1 is a front view illustrating an example of a light source for simulating molten metal leakage 10 according to the present embodiment. The light source for simulating molten metal leakage 10 includes a housing 12 and a light emitting unit 14. The housing 12 has a cylindrical shape and has a space thereinside in which the light emitting unit 14 can be housed. The housing 12 includes glass or resin that isotropically diffuses light emitted by the light emitting unit 14. The size of the housing 12 is, for example, 30 mm in diameter and 50 mm in height.

The light emitting unit 14 is a light emitter configured to allow adjustment of coordinates of a color space of light to be emitted. In the present embodiment, the color space is, for example, an RGB color space with which the RGB values of the light emitter are independently adjusted so as to adjust the coordinates of the light to be emitted in the color space. The light emitting unit 14 includes three LEDs respectively emitting red, green, and blue light, the intensities of which are independently adjustable by dimmers, a G light beam, and a B light beam. The light beams emitted from the LEDs are independently adjusted using dimmers so as to independently adjust the RGB values of the light to be emitted.

The coordinates of the color space of the light to be emitted by the light emitting unit 14 are adjusted so as to fall within a range of coordinates of a color space of pixels in image data generated by taking an image of molten metal simulated by the light source for simulating molten metal leakage 10. Preferably, the chemical composition and the temperature of the molten metal the image of which is to be taken are the chemical composition and the temperature close to those of the molten metal to be detected by the molten metal leakage detection device, which will be described later. Preferably, the image of the molten metal is taken in a facility in which leakage of molten metal is detected by the molten metal leakage detection device. Preferably, for example, in a metal continuous casting machine, which will be described later, an image of molten metal poured into a mold from a tundish is taken. Thus, molten metal leaked from the facility can be simulated by the light emitted by the light source for simulating molten metal leakage 10.

Preferably, the coordinates of the color space of the light emitted by the light emitting unit 14 are adjusted such that coordinates of a color space of pixels in image data generated by taking an image of the light to be emitted by the light emitting unit 14 and the coordinates of the color space of the pixels in the image data generated by taking an image of molten metal are coincident with each other. Thus, molten metal leaked from the facility can be more accurately simulated by the light emitted by the light source for simulating molten metal leakage 10.

The coordinates of the color space of the light to be emitted by the light emitting unit 14 may be adjusted so as to fall outside the range of the coordinates of the color space of the pixels in the image data generated by taking an image of molten metal simulated by the light source for simulating molten metal leakage 10. When the coordinates of the color space of the light emitted by the light emitting unit 14 are adjusted so as to fall outside the range of the coordinates of the color space of the molten metal as described above, light emission different from the molten metal leaked from the facility can be simulated. The light source for simulating molten metal leakage 10 according to the present embodiment includes the light emitting unit 14 configured to allow adjustment of the coordinates of the color space of the emitted light as described above. Accordingly, light emission by the leaked molten metal and light emission of the color space different from that of the molten metal can be simulated with a single light source.

The light source for simulating molten metal leakage 10 according to the present embodiment is suitably used for the operation confirmation and the tuning of the molten metal leakage detection device that detects the leakage of molten metal from a molten metal handling facility that handles the molten metal. The molten metal leakage detection device analyzes, using an image analyzer, the image data generated by taking an image, using a camera, of an operating state of the facility so as to detect the leakage of molten metal from the facility.

Next, a molten metal leakage detection device 50 is described. Fig. 2 is a schematic sectional view of a metal continuous casting machine 20 using the molten metal leakage detection device 50 for detecting the leakage of molten metal. The metal continuous casting machine 20 illustrated in Fig. 2 is an example of the molten metal handling facility. Other examples of the molten metal handling facility include a transport ladle and a transport container for transportation of molten metal. The leakage of molten metal from these facilities may be detected by the molten metal leakage detection device 50.

The metal continuous casting facility 20 includes a mold 22, a tundish 24 installed above the mold 22, and a plurality of strand support rolls 26 arranged below the mold 22. Although it is not illustrated, a ladle to contain molten metal 28 is installed above the tundish 24, and the molten metal 28 is poured from a bottom portion of the ladle into the tundish 24. A sliding gate 29 and an submerged entry nozzle 30 are installed in a bottom portion of the tundish 24. When the sliding gate 29 slides so as to closure released by the sliding gate 29, the molten metal 28 is poured into the mold 22 via the submerged entry nozzle 30. Heat of the molten metal 28 is extracted via an inner surface of the mold 22 to solidify the molten metal 28, and a solidified shell 32 is formed. In this way, a slab 36, which includes the solidified shell 32 serving as a shell and a liquid core 34 including the molten metal 28 disposed inside the slab 36, is formed.

A plurality of secondary cooling zones 38 are installed immediately below the mold 22 in a casting direction between the strand support rolls 26 adjacent to each other in the casting direction. Spray nozzles (not illustrated) are disposed in the secondary cooling zones 38. The slab 36 is cooled by cooling water jetting from the spray nozzles of the secondary cooling zones 38 while being extracted. While the slab 36 is being transported by the strand support rolls 26 and passing through the plurality of secondary cooling zones 38, the solidified shell 32 is appropriately cooled to progress the solidification of the liquid core 34, and solidification of the slab 36 is completed.

A plurality of run-out rolls 27 to continue the transportation of the slab 36 are installed on the downstream side in the casting direction. A slab cutter 40 for cutting the slab 36 is disposed above the run-out rolls 27. After complete solidification, the slab 36 is cut by the slab cutter 40, and slabs 36a of a predetermined length are continuously cast.

In such a metal continuous casting machine 20, breakouts in which the molten metal 28 leaks from the solidified shell 32 formed in the slab 36 to the outside may occur. The molten metal leakage detection device 50 according to the present embodiment is used to detect this leakage of the molten metal 28 to the outside.

The molten metal leakage detection device 50 includes a camera 52 and an image analyzer 54. The camera 52 takes an image of the metal continuous casting machine 20 including the slab 36 below the mold 22 to generate image data and transmits the generated image data to the image analyzer 54.

The image analyzer 54 measures the number of pixels indicating a specific color included in a predetermined region of the image data acquired from the camera 52 so as to acquire pixel number data that is the number of the pixels indicating the specific color. Here, the specific color refers to a color indicating the molten metal 28 included in the predetermined region of the image data. The image analyzer 54 detects that the molten metal 28 leaks to the outside using the pixel number data. The camera 52 is an example of an image taking unit. The camera 52 is, for example, a digital camera or a video camera that includes a charge-coupled device (CCD) image sensor or a complementary metal-oxide semiconductor (CMOS) image sensor and that can generate color image data.

The molten metal leakage detection device 50 may include two or more cameras 52 to take images of the entire circumference of a portion below the mold 22. In this case, the image analyzer 54 detects the leakage of the molten metal 28 by acquiring the pixel number data acquired from each of the cameras.

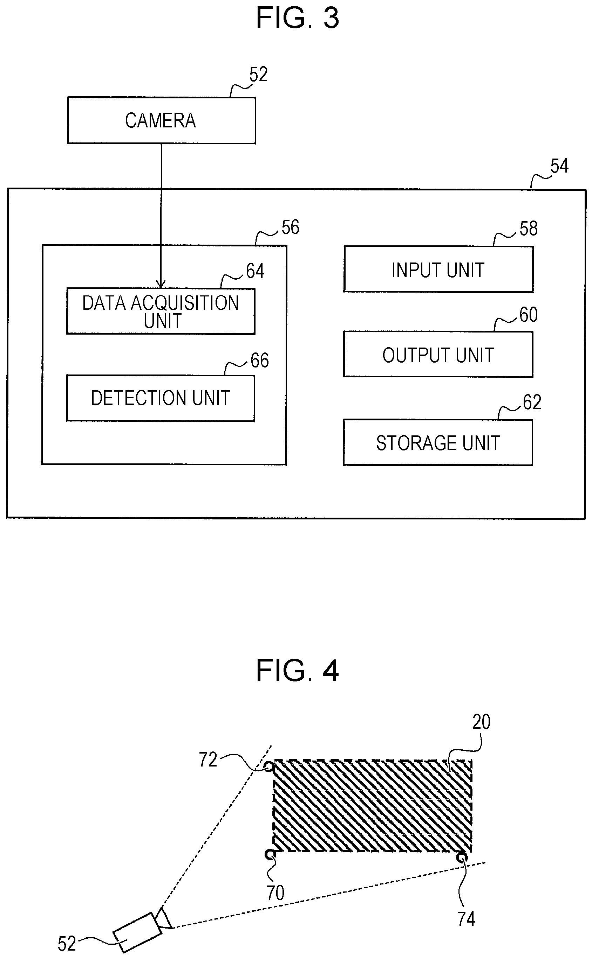

Next, the image analyzer 54 is described. Fig. 3 is a schematic diagram illustrating an example of the configuration of the image analyzer 54. The image analyzer 54 is, for example, a general-purpose computer such as a workstation or a personal computer. The image analyzer 54 includes a control unit 56, an input unit 58, an output unit 60, and a storage unit 62.

The control unit 56 is, for example, a central processing unit (CPU) or the like and executes various programs stored in the storage unit 62 so as to cause the control unit 56 to function as a data acquisition unit 64 and a detection unit 66. The input unit 58 is, for example, a touch panel or the like integrally provided with a keyboard and a display. The output unit 60 is, for example, a liquid crystal display (LCD), a cathode-ray tube (CRT) display, or a beacon light. The storage unit 62 includes, for example, a flash memory configured to allow update of its content, a hard-disk drive disposed thereinside or connected via data communication terminals, an information recording medium such as a memory card or the like, and reader/writer for the information recording medium. The storage unit 62 stores the programs and data used to acquire the pixel number data indicating the specific color from the image data received from the camera 52 and detect the leakage of the molten metal 28 using the pixel number data.

Next, processing executed by the data acquisition unit 64 and the detection unit 66 is described. In response to reception of the image data generated by the camera 52, the data acquisition unit 64 measures the number of pixels indicating the specific color included in the predetermined region in this image data to acquire the pixel number data.

Specifically, in response to reception of the image data, the data acquisition unit 64 reads information indicating the predetermined region from the storage unit 62 and identifies the predetermined region. The predetermined region is set so as to exclude disturbance unavoidably entering an image taking region based on the position where the camera is installed.

Furthermore, the data acquisition unit 64 converts the RGB values of each pixel into HSV values. The reason for this is that the range of the specific color is set in a range of the HSV values. The range of the specific color may be set in a range of the coordinates of the color space such as the RGB values and the HSV values. In this case, the data acquisition unit 64 performs the conversion of the pixels so as to correspond to the color space in which the range of the specific color is set.

The data acquisition unit 64 reads information indicating the range of the specific color from the storage unit 62, compares the HSV values of all the pixels included in the predetermined region with the information indicating the range, and measures the number of pixels that fall within the range of the specific color. Thus, the data acquisition unit 64 acquires the pixel number data indicating the specific color.

The detection unit 66 executes a detecting step to detect the leakage of the molten metal 28 using the pixel number data obtained by the data acquisition unit 64. The detection unit 66 determines whether the number of pixels indicating the specific color is greater than or equal to a reference number using the pixel number data. The detection unit 66 reads information indicating the reference number from the storage unit 62 and detects the leakage of the molten metal 28 when the number of pixels indicating the specific color is greater than or equal to the reference number. In contrast, the detection unit 66 does not detect the leakage of the molten metal 28 when the number of pixels indicating the specific color is smaller than the reference number. The reference number is, for example, 1000.

In response to detection of the leakage of the molten metal 28, the detection unit 66 causes representation indicating the leakage of the molten metal 28 to be displayed in the output unit 60, that is, such representation is displayed in the LCD or the CRT display or the beacon light is turned on. Thus, surrounding persons can be notified of the leakage of the molten metal 28.

As described above, the molten metal leakage detection device 50 detects the leakage of the molten metal 28 using the pixel number data indicating the specific color. The position of the camera 52, the predetermined region used to detect the leakage of the molten metal 28, and the range and the reference number of the specific color are determined via tuning performed when the molten metal leakage detection device 50 is installed in the metal continuous casting machine 20. For this tuning of the molten metal leakage detection device 50, the light source for simulating molten metal leakage 10 according to the present embodiment is used. The light source for simulating molten metal leakage 10 is adjusted such that the coordinates of the color space of the light emitting unit 14 fall within the range of the coordinates of the color space of the molten metal.

Fig. 4 is a schematic sectional view illustrating a state in which the molten metal leakage detection device 50 is tuned. A region indicated by dotted lines in Fig. 4 is a sectional region of the metal continuous casting machine 20. As illustrated in Fig. 4, in the tuning of the molten metal leakage detection device 50, light sources for simulating molten metal leakage 10 are installed at a position 70 close to the camera 52 and positions 72 and 74 far from the camera 52. This step is an installing step.

When the breakouts occur in the metal continuous casting machine 20, many of the breakouts occur in a range within 5 m from a position immediately below the mold 22. For this reason, the light sources for simulating molten metal leakage 10 are installed at the positions within a range of 5 m below the mold 22. Images of the light sources for simulating molten metal leakage 10 installed at the positions are taken by the camera 52 to generate image data for each position. This step is an image data generating step.

The predetermined region is set in the following range: the position of the pixel indicating the light source for simulating molten metal leakage 10 in each of the generated pieces of image data is included and surrounding disturbance is not included. This step is a setting step. The information indicating the predetermined region is input from the input unit 58 and stored in the storage unit 62.

The installation position of the camera 52 may be changed in consideration of the positions of the light sources for simulating molten metal leakage 10 and the surrounding disturbance. The installation position of the camera 52 after the change is set in consideration of the positions of the light sources for simulating molten metal leakage 10 in the generated image data and the surrounding disturbance. This step is also a setting step.

The range of the specific color is set so as to include the HSV values of the pixel of the light source for simulating molten metal leakage 10 in each of the generated pieces of image data. This step is also a setting step. The information indicating the range of the specific color is input from the input unit 58 and stored in the storage unit 62. This is a method for setting the specific color in the molten metal leakage detection device 50. When the range of the specific color is set as described above, the range of the specific color can be set in accordance with a surrounding environment such as location of illumination in a factory. The range of the specific color is not limited to the HSV values. The range of the specific color may be set in a range of the coordinates of the color space of the RGB values. In this case, the range of the specific color is set so as to include the coordinates of the color space of the pixel of the light source for simulating molten metal leakage 10 in each of the generated pieces of image data.

Regarding the reference number, the data acquisition unit 64 is caused to measure the number of pixels of the specific color included in the predetermined region of the image data to acquire the pixel number data. This step is a data acquiring step. The reference number is the pixel number in the pixel number data and set to be the number of pixels at which the leakage of molten metal is detected but the leakage is not detected in a splash of the molten metal observed in a normal operation. This step is a threshold setting step. The information indicating the reference number of the pixels of the specific color is input from the input unit 58 and stored in the storage unit 62. This is a method for setting the threshold in the molten metal leakage detection device. When the reference number as the threshold is determined as described above, the reference number as the threshold can be set in accordance with the surrounding environment such as location of illumination in a factory.

Preferably, the image data generating step is executed using the light source for simulating molten metal leakage 10 for which the RGB values are changed by about ±5% so as to allow the detection of the leakage of molten metal even when the color of the molten metal changes in some degree. Furthermore, when influence of the disturbance such as sunlight from the outside of the factory, illumination in the factory, or water vapor is assumed, preferably, the image data generating step is executed while the sunlight or the illumination is changed or the water vapor is added in consideration of such disturbance. The RGB values of the light source for simulating molten metal leakage 10 may be further adjusted in consideration of such disturbance.

Next, a method for confirming an operation of the molten metal leakage detection device 50 is described. The operation of the molten metal leakage detection device 50 can be confirmed by using the light source for simulating molten metal leakage 10 according to the present embodiment. To confirm the operation of the molten metal leakage detection device 50, first, the light source for simulating molten metal leakage 10 for which the coordinates of the color space of the light emitting unit 14 are adjusted so as to fall within the range of the coordinates of the color space of the molten metal is installed at a predetermined position below the mold 22 in the metal continuous casting machine 20. This step is the installing step. It is sufficient that a mirror be installed at a position where the light source for simulating molten metal leakage 10 cannot be installed. In this case, the light source for simulating molten metal leakage 10 is installed at such a position that the light therefrom reflected by the mirror is directed to the camera 52.

The image of the metal continuous casting machine 20 including the light source for simulating molten metal leakage 10 installed at the predetermined position is taken by the camera 52 to generate the image data. This step is an image data generating step.

The data acquisition unit 64 is caused to measure the number of pixels of the specific color included in the predetermined region of the image data to acquired the pixel number data. This step is the data acquiring step. Using the pixel number data acquired in the data acquiring step, the detection unit 66 confirms that the number of pixels indicating the specific color is greater than or equal to the reference number and the detection unit 66 detects the leakage of the molten metal 28. This step is a confirming step. The installing step, the image data generating step, the data acquiring step, and the confirming step are executed for various positions of the metal continuous casting machine 20. In this way, the operation of the molten metal leakage detection device 50 is confirmed. Preferably, also when this operation confirmation is executed, the RGB values of the light source for simulating molten metal leakage 10 are changed by about ±5%, the sunlight or the illumination is changed, or the water vapor is added. The RGB values of the light source for simulating molten metal leakage 10 may be further adjusted in consideration of such disturbance.

In the method for confirming the operation of the molten metal leakage detection device 50, preferably, the light source for simulating molten metal leakage 10 for which the coordinates of the color space of the light emitting unit 14 are adjusted so as to fall outside the range of the coordinates of the color space of the molten metal is used to further confirm that the leakage of molten metal is not detected with this light emission. In the past, the molten metal leakage detection device 50 malfunctioned when a handheld white flashlight used by an operator for checking facilities was detected. In order to address this, the light source for simulating molten metal leakage 10 for which the coordinates of the color space of the light emitted from the light emitting unit 14 are adjusted to coordinates the detection of which is not desired is used to confirm that the leakage of molten metal is not detected with this light emission. In this way, it can be confirmed that the molten metal leakage detection device 50 does not malfunction.

As has been described, the leakage of molten metal such as a breakout from the molten metal handling facility can be easily simulated by using the light source for simulating molten metal leakage 10 according to the present embodiment. Also, operation confirmation and tuning of the molten metal leakage detection device 50 that detects the leakage of molten metal can be quickly, easily, and safely performed by using the light source for simulating molten metal leakage 10 according to the present embodiment. Furthermore, the leakage of molten metal can be detected from the first time in the beginning by using the light source for simulating molten metal leakage 10 for tuning of the molten metal leakage detection device 50.

The light source for simulating molten metal leakage 10 according to the present embodiment allows independent adjustment of the RGB values of the light emitting unit 14. Thus, the light emitted by the molten metal can be simulated in accordance with the chemical composition and temperature of the molten metal. To address a case where the influence of disturbance is assumed or a case where the color of the molten metal changes, adjustment such as changing the RGB values by about ±5% can be performed.

In the example having been described, the light source for simulating molten metal leakage 10 according to the present embodiment is used to tune the molten metal leakage detection device 50 performing detection based on the number of pixels of the specific color included in the predetermined region of the image data. However, this is not limiting. For example, image data may be generated by taking images using a camera continuously at predetermined time intervals to acquire time-series data of the number of the pixels of the specific color from the image data, and the time-series data may be used to tune the molten metal leakage detection device that detects the leakage of molten metal. In this case, as the threshold to detect the leakage of molten metal, for example, duration for which the number of pixels of the specific color continuously remains greater than or equal to the reference number or an integrated value of the pixels within a predetermined time is used. The light source for simulating molten metal leakage 10 may be used to set the threshold.

### Reference Signs List

- 10: light source for simulating molten metal leakage
- 12: housing
- 14: light emitting unit
- 20: metal continuous casting machine
- 22: mold
- 24: tundish
- 26: strand support roll
- 27: run-out roll
- 28: molten metal
- 29: sliding gate
- 30: submerged entry nozzle
- 32: solidified shell
- 34: liquid core
- 36: slab
- 36a: slab
- 38: secondary cooling zone
- 40: slab cutter
- 50: molten metal leakage detection device
- 52: camera
- 54: image analyzer
- 56: control unit
- 58: input unit
- 60: output unit
- 62: storage unit
- 64: data acquisition unit
- 66: detection unit
- 70: position
- 72: position
- 74: position

## Claims

1. A light source for simulating molten metal leakage used to simulate leakage of molten metal from a molten metal handling facility, the light source for simulating molten metal leakage comprising:
a light emitting unit configured to allow adjustment of coordinates of a color space of light to be emitted by the light emitting unit.

2. The light source for simulating molten metal leakage according to claim 1,
wherein the coordinates of the color space of the light emitting unit are adjusted so as to fall within a range of coordinates of a color space of pixels in image data generated by taking an image of the molten metal.

3. A method for simulating molten metal leakage simulating leakage of molten metal in a molten metal handling facility,
wherein the light source for simulating molten metal leakage according to claim 2 is installed in the facility to simulate the leakage of the molten metal from the facility.

4. A method for confirming an operation of a molten metal leakage detection device using the light source for simulating molten metal leakage according to claim 1,
wherein the leakage detection device includes
an image taking unit configured to take an image of the molten metal handling facility to generate image data,
a data acquisition unit configured to acquire pixel number data of pixels indicating a specific color included in a predetermined region of the image data, and
a detection unit configured to detect, using the pixel number data, that molten metal leaks, and
wherein the method includes
an installing step installing, in the facility, the light source for simulating molten metal leakage in which the coordinates of the color space of the light emitting unit are adjusted so as to fall within a range of coordinates of a color space of pixels in image data generated by taking an image of the molten metal,
an image data generating step generating the image data by taking an image, using the image taking unit, of the facility including the light source for simulating molten metal leakage,
a data acquiring step acquiring the pixel number data of the pixels indicating the specific color included in the predetermined region of the image data, and
a confirming step confirming that the detection unit detects the leakage of the molten metal using the pixel number data.

5. A method for confirming an operation of a molten metal leakage detection device,
wherein the method uses the light source for simulating molten metal leakage according to claim 1,
wherein the leakage detection device includes
an image taking unit configured to take an image of the molten metal handling facility to generate image data,
a data acquisition unit configured to acquire pixel number data of pixels indicating a specific color included in a predetermined region of the image data, and
a detection unit configured to detect, using the pixel number data, that molten metal leaks, and
wherein the method includes
an installing step installing, in the facility, the light source for simulating molten metal leakage in which the coordinates of the color space of the light emitting unit are adjusted so as to fall outside a range of coordinates of a color space of pixels in image data generated by taking an image of the molten metal,
an image data generating step generating the image data by taking an image, using the image taking unit, of the facility including the light source for simulating molten metal leakage,
a data acquiring step acquiring the pixel number data of the pixels indicating the specific color included in the predetermined region of the image data, and
a confirming step confirming that the detection unit does not detect the leakage of the molten metal using the pixel number data.

6. A method for setting a molten metal leakage detection device,
wherein the method uses the light source for simulating molten metal leakage according to claim 2,
wherein the leakage detection device includes
an image taking unit configured to take an image of the molten metal handling facility to generate image data,
a data acquisition unit configured to acquire pixel number data of pixels indicating a specific color included in a predetermined region of the image data, and
a detection unit configured to detect, using the pixel number data, that molten metal leaks, and
wherein the method includes
an installing step installing the light source for simulating molten metal leakage in the facility,
an image data generating step generating the image data by taking an image, using the image taking unit, of the facility including the light source for simulating molten metal leakage, and
a setting step setting an installation position of the image taking unit using the image data.

7. A method for setting a molten metal leakage detection device,
wherein the method uses the light source for simulating molten metal leakage according to claim 2,
wherein the leakage detection device includes
an image taking unit configured to take an image of the molten metal handling facility to generate image data,
a data acquisition unit configured to acquire pixel number data of pixels indicating a specific color included in a predetermined region of the image data, and
a detection unit configured to detect, using the pixel number data, that molten metal leaks, and
wherein the method includes
an installing step installing the light source for simulating molten metal leakage in the facility,
an image data generating step generating the image data by taking an image, using the image taking unit, of the facility including the light source for simulating molten metal leakage, and
a setting step setting a range of coordinates in a color space of the specific color using coordinates of pixels, in a color space, indicating the light source for simulating molten metal leakage in the image data.

8. A method for setting a molten metal leakage detection device,
wherein the method uses the light source for simulating molten metal leakage according to claim 2,
wherein the leakage detection device includes
an image taking unit configured to take an image of the molten metal handling facility to generate image data,
a data acquisition unit configured to acquire pixel number data of pixels indicating a specific color included in a predetermined region of the image data, and
a detection unit configured to detect, using the pixel number data, that molten metal leaks, and
wherein the method includes
an installing step installing the light source for simulating molten metal leakage in the facility,
an image data generating step generating the image data by taking an image, using the image taking unit, of the facility including the light source for simulating molten metal leakage,
a data acquiring step acquiring the pixel number data of the pixels indicating the specific color included in the predetermined region of the image data, and
a setting step setting a threshold used when the detection unit detects that the molten metal leaks using the pixel number data.
